# EUROPÄISCHE PATENTANMELDUNG

(11) **EP 4 412 254 A1**
(43) Veröffentlichungstag der Anmeldung: **07.08.2024**
(21) Anmeldenummer: 24153330.6
(22) Anmeldetag: 23.01.2024
(51) Int. Cl.: H04R 25/00

(54) **VERFAHREN ZUM BETRIEB EINES HÖRGERÄTS**

(30) Priorität: 31.01.2023 DE 102023200779
(71) Anmelder: Sivantos Pte. Ltd., Singapore 539775 (SG)
(72) Erfinder: NARAMPANAWE, Nishshanka Bandara, 539775 Singapur (SG); YAP, Heng Goh, 539775 Singapur (SG)
(74) Vertreter: FDST Patentanwälte

(57) **Zusammenfassung**

Die Erfindung betrifft ein Verfahren (70) zum Betrieb eines Hörgeräts (2), insbesondere Hörhilfegerät, das eine induktive Ladeeinheit (20), die eine Empfangsspule (34) aufweist, und eine Batterie (18) umfasst, die über eine Kommunikationseinheit (26) mit der Ladeeinheit (24) elektrisch verbunden ist. Mittels der Kommunikationseinheit (26) wird eine an der Empfangsspule (34) anliegende elektrische Spannung (36) in Abhängigkeit von zu übertragenden Daten (74) verändert. Ferner betrifft die Erfindung ein Hörgerät (2) sowie ein Hörgerätesystem (22).

## Beschreibung

Die Erfindung betrifft ein Verfahren zum Betrieb eines Hörgeräts sowie ein Hörgerät als auch ein Hörgerätesystem. Das Hörgerät weist jeweils eine induktive Ladeeinheit auf.

Personen, die unter einer Verminderung des Hörvermögens leiden, verwenden üblicherweise ein Hörhilfegerät, das ein Hörgerät ist. Hierbei wird meist mittels eines Mikrofons, also eines elektromechanischen Schallwandlers, ein Umgebungsschall in ein elektrisches (Audio-/Schall-)Signal gewandelt, sodass das elektrische Signal erfasst wird. Die erfassten elektrischen Signale werden mittels einer Verstärkerschaltung bearbeitet und mittels eines weiteren elektromechanischen Wandlers in Form eines Hörers in den Gehörgang der Person eingeleitet. Meist erfolgt zudem eine Bearbeitung der erfassten Schallsignale, wofür üblicherweise ein Signalprozessor der Verstärkerschaltung verwendet wird. Hierbei ist die Verstärkung auf einen etwaigen Hörverlust des Hörgeräteträgers abgestimmt. Die (Schall-)Wandler und die Verstärkerschaltung sind üblicherweise in einem Gehäuse angeordnet und auf diese Weise vor Umwelteinflüssen zumindest teilweise geschützt.

Zur Bestromung der einzelnen Komponenten des Hörhilfegeräts, wie der Verstärkerschaltung und der Schallwandler, wird zumeist eine Batterie verwendet. Diese ist zum Beispiel als austauschbare Sekundärbatterie ausgestaltet, die aus dem Gehäuse entnommen und außerhalb des Gehäuses geladen werden kann. Infolgedessen ist es erforderlich, dass das Gehäuse eine Mindestgröße aufweist, sodass eine manuelle Entnahme der Batterie ermöglicht ist. Bei einer weiteren Verringerung der Baugröße des Gehäuses ist eine derartige Entnahme nicht mehr möglich. In diesem Fall ist die Batterie fest verbaut und wird innerhalb des Gehäuses geladen. Damit hierbei möglichst wenige Öffnungen in dem Gehäuse vorhanden sind, durch die beispielsweise Fremdpartikel in das Gehäuse eintreten können, ist in zunehmendem Maße eine Ladeeinheit in dem Gehäuse vorgesehen, die eine Empfangsspule aufweist., und die elektrisch mit der Batterie verbunden ist. Zum Laden der Batterie wird die Empfangsspule mittels eines externen Ladegeräts induktiv erregt, sodass ein kabelloses Laden der Batterie und somit des Hörhilfegeräts erfolgt. Mit anderen Worten handelt es sich um eine induktive Ladeeinheit.

Mit zunehmenden Ladezustand der Batterie ist der zwischen der Empfangsspule und der Batterie fließende elektrische Strom verringert, was zu einer verringerten Energieübertragung zwischen dem Ladegerät und der Ladeeinheit führt. Dies wird mittels einer entsprechenden Überwachungseinheit des Ladegeräts überwacht, sodass dort der Ladezustand der Batterie angezeigt werden kann, ohne dass hierfür eine gesonderte Kommunikationsverbindung erforderlich ist. Somit ist es beispielsweise möglich, das Ladegerät abzuschalten, wenn die Batterie vollständig geladen wurde.

Bei einer Weiterentwicklung ist in dem Hörgerät eine Kommunikationseinheit vorhanden, die elektrisch parallel zu der Batterie geschaltet und mit der Ladeeinheit elektrisch verbunden ist. Mittels der Kommunikationseinheit wird bei Bedarf ein elektrischer Stromfluss bereitgestellt, sodass sich auf Seiten des Ladegeräts ein sich zeitlich ändernder Verlauf des Energieübertrags ergibt. Bei einer entsprechenden Einstellung der mittels der Kommunikationseinheit bereitgestellten elektrische Ströme ist es somit möglich, auch sonstige Informationen von dem Hörgerät zu dem Ladegerät zu übertragen.

Bei Betrieb der Ladeeinheit entstehen elektrische Verluste, die zu einer Erwärmung der Ladeeinheit und somit des Hörhilfegeräts führen. Bei einer übermäßigen Erwärmung ist es hierbei möglich, dass eine Leistungsfähigkeit der Batterie nachlässt. Somit ist eine maximale Betriebsdauer des Hörhilfegeräts zwischen zwei Ladevorgängen verringert. Die elektrischen Verluste treten dabei unter anderem in der Empfangsspule auf, wobei diese abhängig von der Höhe der damit geführten elektrischen Ströme sind. Falls dabei mittels der Kommunikationseinheit zusätzlich elektrische Ströme bereitgestellt werden, sind die elektrischen Verluste erhöht.

Der Erfindung liegt die Aufgabe zugrunde, ein besonders geeignetes Verfahren zum Betrieb eines Hörgeräts sowie ein besonders geeignetes Hörgerät als auch ein besonders geeignetes Hörgerätesystem anzugeben, wobei insbesondere auftretende elektrische Verluste reduziert sind.

Hinsichtlich des Verfahrens wird diese Aufgabe durch die Merkmale des Anspruchs 1, hinsichtlich des Hörgeräts durch die Merkmale des Anspruchs 3 und hinsichtlich des Hörgerätesystems durch die Merkmale des Anspruchs 9 gelöst. Vorteilhafte Weiterbildungen und Ausgestaltungen sind Gegenstand der Unteransprüche.

Das Verfahren dient dem Betrieb eines Hörgeräts. Beispielsweise ist das Hörgerät ein Kopfhörer oder umfasst einen Kopfhörer, und das Hörgerät ist zum Beispiel ein Headset. Besonders bevorzugt ist das Hörgerät jedoch ein Hörhilfegerät. Das Hörhilfegerät dient der Unterstützung einer unter einer Verminderung des Hörvermögens leidenden Person. Mit anderen Worten ist das Hörhilfegerät ein medizinisches Gerät, mittels dessen beispielsweise ein partieller Hörverlust ausgeglichen wird. Das Hörhilfegerät ist beispielsweise ein "Receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. Alternativ ist das Hörhilfegerät ein Hinter-dem-Ohr-Hörhilfegerät ("Behind-the-Ear"-Hörhilfegerät), das hinter einer Ohrmuschel getragen wird.

Das Hörgerät ist vorgesehen und eingerichtet, am menschlichen Körper getragen zu werden. Mit anderen Worten umfasst das Hörgerät bevorzugt eine Haltevorrichtung, mittels deren eine Befestigung am menschlichen Körper möglich ist. Sofern es sich bei dem Hörgerät um ein Hörhilfegerät handelt, ist das Hörgerät vorgesehen und eingerichtet, beispielsweise hinter dem Ohr oder innerhalb eines Gehörgangs angeordnet zu werden. Insbesondere ist das Hörgerät kabellos und dafür vorgesehen und eingerichtet, zumindest teilweise in einen Gehörgang eingeführt zu werden.

Das Hörgerät umfasst zum Beispiel ein Mikrofon, das dem Erfassen von Schall dient. Insbesondere wird bei Betrieb mittels des Mikrofons ein Umgebungsschall, also Schallwellen, erfasst, oder zumindest ein Teil hiervon. Bei dem Mikrofon handelt es sich geeigneterweise um einen elektromechanischen Schallwandler. Das Mikrofon weist beispielsweise lediglich eine einzige Mikrofoneinheit oder mehrere Mikrofoneinheiten auf, die miteinander wechselwirken. Jede der Mikrofoneinheiten weist zweckmäßigerweise eine Membran auf, die anhand von Schallwellen in Schwingungen versetzt wird, wobei die Schwingungen mittels eines entsprechenden Aufnahmegeräts, wie eines Magneten, der in einer Spule bewegt wird, in ein elektrisches Signal gewandelt wird. Somit ist es möglich, mittels der jeweiligen Mikrofoneinheit ein Audiosignal zu erfassen, das auf dem auf die Mikrofoneinheit auftreffendem Schall, nämlich insbesondere dem Umgebungsschall, basiert. Die Mikrofoneinheiten sind vorzugsweise omnidirektional ausgestaltet. Das Mikrofon ist zweckmäßigerweise zumindest teilweise innerhalb eines Gehäuses des Hörgeräts angeordnet und somit zumindest teilweise geschützt.

Zweckmäßigerweise weist das Hörgerät einen Hörer zum Ausgeben eines Ausgabesignals auf. Das Ausgabesignal ist hierbei insbesondere ein elektrisches Signal. Der Hörer ist ein elektromechanischer Schallwandler, vorzugsweise ein Lautsprecher. Je nach Ausgestaltung des Hörgeräts ist im bestimmungsgemäßen Zustand der Hörer zumindest teilweise innerhalb eines Gehörgangs eines Trägers des Hörgeräts, also einer Person, angeordnet oder zumindest akustisch mit diesem verbunden. Das Hörgerät dient insbesondere hauptsächlich dem Ausgeben des Ausgabesignals mittels des Hörers, wobei ein entsprechender Schall erstellt wird. Mit anderen Worten ist die Hauptfunktion des Hörgeräts bevorzugt das Ausgeben des Ausgabesignals. Das Ausgabesignal wird dabei insbesondere zumindest teilweise in Abhängigkeit des mittels des Mikrofons erfassten Schalls erstellt.

Das Hörgerät umfasst zweckmäßigerweise einen Signalprozessor, der geeigneterweise eine Signalverarbeitungseinheit bildet oder zumindest ein Bestandteil hiervon ist. Zumindest jedoch umfasst das Hörgerät zweckmäßigerweise eine entsprechende Signalverarbeitungseinheit. Der Signalprozessor ist beispielsweise ein digitaler Signalprozessor (DSP) oder mittels analoger Komponenten realisiert. Mittels des Signalprozessors erfolgt insbesondere eine Anpassung des mittels des etwaigen Mikrofons erstellten (Audio-)Signals, vorzugsweise in Abhängigkeit eines etwaigen Hörverlust eines Trägers (Nutzer, Benutzer) des Hörgeräts. Zweckmäßigerweise ist zwischen dem Mikrofon und der Signalverarbeitungseinheit, beispielsweise dem Signalprozessor, ein A/D-Wandler angeordnet, sofern der Signalprozessor als digitaler Signalprozessor ausgestaltet ist. Der Signalprozessor ist insbesondere in Abhängigkeit eines Parametersatzes eingestellt. Mittels des Parametersatzes wird dabei eine Verstärkung in unterschiedlichen Frequenzbereichen vorgegeben, sodass das mittels des Mikrofons erstellte Signal entsprechend bestimmter Vorgaben bearbeitet wird, insbesondere in Abhängigkeit eines Hörverlust des Trägers des Hörgeräts. Besonders bevorzugt umfasst das Hörgerät zusätzlich einen Verstärker, oder der Verstärker ist mittels des Signalprozessors zumindest teilweise gebildet. Beispielsweise ist der Verstärker signaltechnisch dem Signalprozessor vor- oder nachgeschaltet.

Das Hörgerät weist eine Batterie auf, mittels derer bei Betrieb insbesondere eine Bestromung von weiteren Komponenten des Hörgeräts erfolgt, wie des etwaigen Mikrofons, der etwaigen Signalverarbeitungseinheit und/oder des etwaigen Hörers. Vorzugsweise ist die Batterie eine Sekundärbatterie und geeigneterweise fest, also insbesondere unlösbar, in dem etwaigen Gehäuse des Hörgeräts verbaut.

Zudem weist das Hörgerät eine induktive Ladeeinheit auf, die geeigneterweise innerhalb des etwaigen Gehäuses des Hörgeräts angeordnet ist. Die Ladeeinheit dient dem Laden des Hörgeräts, insbesondere der Batterie, dient. Hierfür ist die induktive Ladeeinheit, die im Weiteren auch lediglich als Ladeeinheit bezeichnet wird, geeignet, insbesondere vorgesehen und eingerichtet. Die Ladeeinheit ist dabei zum kabellosen Laden geeignet, zweckmäßigerweise vorgesehen und eingerichtet, ist. Die Ladeeinheit weist eine Empfangsspule auf, in der mittels eines (externen) Ladegeräts eine elektrische Spannung induziert werden kann, indem mittels des Ladegeräts ein sich zeitlich veränderliches Magnetfeld bereitgestellt wird. Hierfür ist die Empfangsspule geeignet, insbesondere vorgesehen und eingerichtet. Mit anderen Worten dient die Empfangsspule insbesondere dem Übertragen, vorzugsweise nämlich dem Empfangen, von Energie von dem Ladegerät zu dem Hörgerät.

Die Ladeeinheit ist mit der Batterie elektrisch verbunden, sodass mittels der Empfangsspule empfangene Energie in die Batterie eingespeist werden kann. Dabei ergibt sich insbesondere aufgrund der in der Empfangsspule induzierten elektrischen Spannung ein elektrischer Stromfluss zu der Batterie, sodass diese geladen wird. Geeigneterweise umfasst die Ladeeinheit einen Gleichrichter, sodass mittels dieser ein Gleichstrom bereitgestellt wird, was das Laden der Batterie vereinfacht. Beispielsweise ist der Gleichrichter mittels einer einzigen Diode gebildet, oder der Gleichrichter ist als Brückengleichrichter ausgestaltet. Zweckmäßigerweise umfasst die Ladeeinheit eine Kapazität, wie einen Kondensator, mittels dessen Schwankungen in dem elektrischen Strom ausgeglichen werden, sodass ein Laden der Batterie mit einem im Wesentlichen konstanten elektrischen Strom erfolgt, falls in der Empfangsspule eine elektrische Spannung induziert wird.

Das Hörgerät umfasst ferner eine Kommunikationseinheit, die insbesondere der Kommunikation des Hörgeräts mit weiteren Bauteilen, vorzugsweise dem Ladegerät dient, und hierfür geeignet, insbesondere vorgesehen und eingerichtet, ist. Die Kommunikationseinheit ist hierbei zwischen der Ladeeinheit und der Batterie angeordnet, sodass die Ladeeinheit über die Kommunikationseinheit mit der Batterie elektrisch verbunden ist. Somit wird der zum Laden der Batterie dienende elektrische Strom über die Kommunikationseinheit geführt. Mittels der Kommunikationseinheit werden vorzugsweise Daten oder Informationen bereitgestellt, die von dem Hörgerät zu dem weiteren Bauteil übertragen werden sollen, insbesondere zu dem etwaigen Ladegerät. Bei dem Daten handelt es sich hierbei insbesondere um Statusinformationen des Hörgeräts.

Das Verfahren sieht vor, dass mittels der Kommunikationseinheit eine an der Empfangsspule anliegende elektrische Spannung in Abhängigkeit von zu übertragenden Daten verändert wird. Das Verfahren wird hierbei insbesondere beim Laden des Hörgeräts durchgeführt, also dann, wenn vorzugsweise mittels des (externen) Ladegeräts in der Empfangsspule eine elektrische Spannung induziert wird, weswegen sich ein elektrischer Stromfluss zu der Batterie ergibt, sodass diese geladen wird. Mittels der Kommunikationseinheit wird die an der Empfangsspule anliegende elektrische Spannung beeinflusst, sodass auch der Energieübertrag von dem Ladegerät zu dem Ladeeinheit verändert wird, was insbesondere anhand von sich in dem Ladegerät ergebenden Spannungsschwankungen, insbesondere an der für den Übertrag der Energie genutzten elektrischen Spule, erfasst wird. Die Spannungsschwankungen korrespondieren zu den Daten, sodass mittels einer entsprechenden Dekodierung die von dem Hörgerät bereitgestellten Daten in dem Ladegerät entschlüsselt werden können.

Vorzugsweise werden mittels der Kommunikationseinheit die Daten codiert und vorzugsweise in ein binäres System übersetzt. Somit sind zwei Zustände vorhanden, und mittels der Kommunikationseinheit wird die an der Empfangsspule anliegende elektrische Spannung zwischen den beiden Zuständen umgeschaltet. Somit ist eine vergleichsweise robustes Übertragung von Daten ermöglicht. Alternativ hierzu sind noch zusätzliche Zustände vorhanden, sodass beispielsweise die an der Empfangsspule anliegende elektrische Spannung mehr als zwei unterschiedliche Größen annehmen kann. Somit ist eine Bandbreite vergrößert. Zusammenfassend erfolgt mittels der Kommunikationseinheit eine Spannungsmodulation der an der Empfangsspule anliegende elektrische Spannung, wobei in der Modulation die zu übertragenden Daten hinterlegt sind.

Aufgrund des Verfahrens sind bei Übertragung von Daten die mittels der Empfangsspule geführten elektrischen Ströme nicht übermäßig erhöht, weswegen keine zusätzlichen Verluste auftreten, die zu einer übermäßigen Erwärmung führen. Somit ist eine Einsatzfähigkeit der Batterie erhöht und eine Degeneration dieser verlangsamt. Zumindest jedoch ist eine Belastung aufgrund einer übermäßigen Erwärmung verringert. Da sich bei der Übertragung von Daten in dem Ladegerät Schwankungen in der übertragene Energiemenge ergeben, ist es möglich, ein bereits vorhandenes Ladegerät zu verwenden, bei dem Schwankungen in der zwischen dem Ladegerät und dem Hörgerät ausgetauschten Energie für die Übertragungen von Daten hervorgerufen werden.

Beispielsweise ist die Batterie über die Kommunikationseinheit direkt mit der Ladeeinheit verbunden, oder vorzugsweise über einen Laderegler. Zweckmäßigerweise bilden der Laderegler und die Batterie eine Batterieeinheit. Mittels des Laderegler erfolgt hierbei insbesondere eine Anpassung des mittels der Ladeeinheit bereitgestellten elektrischen Stroms, insbesondere in Abhängigkeit eines Ladezustand der Batterie. Somit es möglich, eine Einsatzdauer der Batterie weiter zu erhöhen.

Besonders bevorzugt wird ein elektrischer Widerstand der Kommunikationseinheit in Abhängigkeit der zu übertragenen Daten eingestellt.

Insbesondere wird hierbei der elektrische Widerstand der Kommunikationseinheit zwischen zwei Werten geändert, wofür zum Beispiel ein Schalter parallel zu einem elektrischen Bauteil geschaltet ist, das einen bestimmten elektrischen Widerstand aufweist. Mittels des Schalters ist das elektrische Bauteil überbrückt, sodass dies lediglich dann, wenn der Schalter geöffnet ist, zur Bereitstellung des elektrischen Widerstands beiträgt.

Aufgrund der Reihenschaltung der Kommunikationseinheit mit der Batterie ist die an der Empfangsspule anliegende elektrische Spannung somit im Wesentlichen entweder lediglich gleich der mittels der Batterie bereitgestellten elektrischen Spannung, die über zumindest vergleichsweise kurze Zeitabschnitte annähernd konstant ist, oder zuzüglich der über den elektrischen Bauteil anfallenden elektrischen Spannung, wobei der Wechsel zwischen diesen unterschiedlichen elektrischen Spannungen entsprechend der zu übertragenen Daten durchgeführt wird. Somit ist ein vergleichsweise einfaches Verändern der an der Empfangsspule anliegende elektrische Spannung ermöglicht.

Das Hörgerät ist beispielsweise ein Headset oder besonders bevorzugt ein Hörhilfegerät. Zum Beispiel ist das Hörhilfegerät ein "Receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. Alternativ ist das Hörhilfegerät ein Hinter-dem-Ohr-Hörhilfegerät ("Behind-the-Ear"-Hörhilfegerät), das hinter einer Ohrmuschel getragen wird.

Das Hörgerät weist eine induktive Ladeeinheit, eine Batterie und eine Kommunikationseinheit auf, wobei die Batterie über die Kommunikationseinheit mit der Ladeeinheit elektrisch verbunden ist. Vorzugsweise handelt sich bei der Batterie um eine Sekundärbatterie, und/oder die Batterie dient dem Bestromen eines etwaigen Hörers, Mikrofons und/oder einer Signalverarbeitungseinheit. Insbesondere wird die Batterie im Wesentlichen zum Bestromen sämtlicher weiterer Bestandteile des Hörgeräts verwendet.

Die Ladeeinheit dient dem kabellosen Laden des Hörgeräts, zweckmäßigerweise der Batterie des Hörgeräts. Die Ladeeinheit dient insbesondere dem kabellosen Empfang von elektrischer Energie, sodass mittels der Ladeeinheit ein kabelloses Laden des Hörgeräts möglich ist, insbesondere ein sogenanntes "Wireless Charging". Die Ladeeinheit weist eine Empfangsspule auf, die bei Betrieb insbesondere mittels eines externen Ladegeräts angeregt wird, sodass darin eine elektrische (Wechsel-)Spannung induziert wird. Insbesondere erfolgt somit eine induktive Anregung der Empfangsspule. Hierfür ist die Empfangsspule insbesondere jeweils geeignet, vorzugsweise vorgesehen und eingerichtet. Die Empfangsspule ist beispielsweise hohlzylindrisch ausgestaltet oder eben. Zumindest weist die Empfangsspule zweckmäßigerweise mehrere Windungen auf, die beispielsweise zueinander baugleich oder unterschiedlich sind. Geeigneterweise ist die Empfangsspule aus einem elektrisch leitfähigen Material, wie zum Beispiel einem Metall, geeigneterweise Aluminium oder Kupfer, erstellt. Vorzugsweise ist die Anzahl der Windungen gleich zwei. Die Empfangsspule weist zum Beispiel eine Induktivität zwischen 50nH und 500nH auf.

Das Hörgerät ist gemäß einem Verfahren betrieben, bei dem mittels der Kommunikationseinheit eine an der Empfangsspule anliegende elektrische Spannung, die insbesondere eine elektrische Wechselspannung ist, in Abhängigkeit von zu übertragenden Daten verändert wird. Insbesondere wird das Verfahren somit zum Übertragen von Daten verwendet. Zweckmäßigerweise wird zum Verändern der an der Empfangsspule anliegenden elektrischen Spannung eine Amplitude der anliegenden elektrischen (Wechsel-)Spannung und/oder eine Phase der anliegenden elektrischen Spannung verändert, wobei insbesondere zweckmäßigerweise lediglich zwei Zustände vorhanden sind, die die anliegende elektrische Spannung annehmen kann, insbesondere zwei unterschiedliche Amplituden. Aufgrund des Verfahrens ist somit kein zusätzliches Kommunikationskanal zur Übertragung von Daten zwischen dem Hörgerät und dem etwaigen externen Ladegerät erforderlich. Dabei sind die mit der Empfangsspule geführten elektrischen Ströme, die sich insbesondere aufgrund der darin induzierten elektrischen Spannung ergeben, verringert oder zumindest begrenzt, sodass elektrische Verluste verringert sind.

Insbesondere umfasst das Hörgerät eine Steuereinheit, die geeignet, insbesondere vorgesehen eingerichtet ist, das Verfahren durchzuführen, und/oder das Verfahren wird zumindest teilweise mittels der Kommunikationseinheit durchgeführt. Zweckmäßigerweise bildet die Kommunikationseinheit zumindest teilweise die Steuereinheit bildet. Vorzugsweise ist die Steuereinheit mittels diskreter Komponenten realisiert, oder diese umfasst einen Mikrocontroller, der zum Beispiel programmierbar ausgestaltet ist. In einer weiteren Alternative ist die Steuereinheit als anwendungsspezifischer Schaltkreis (ASIC) ausgestaltet.

Zweckmäßigerweise umfasst die Kommunikationseinheit eine Diode, mittels derer die Ladeeinheit und die Batterie elektrisch verbunden sind. Hierbei ist die Diode mittels eines Schaltelements überbrückt, sodass die Ladeeinheit und die Batterie auch mittels des Schaltelements elektrisch verbunden sind. Somit weist die Kommunikationseinheit zwei Zweige auf, mittels derer die Ladeeinheit mit der Batterie elektrisch verbunden sind, wobei dem einen der Zweige die Diode und dem anderen das Schaltelement zugeordnet ist. Die Diode ist vorzugsweise derart angeordnet, dass ein elektrischer Stromfluss von der Ladeeinheit zu der Batterie stets möglich ist. Somit erfolgt das Laden der Batterie stets, wenn an der Empfangsspule eine elektrische Spannung anliegt, unabhängig von dem Übertragen der Daten, sodass ein Zeitbedarf zum Laden der Batterie verringert ist. Auch ist es somit möglich, die Batterie mit einem im Wesentlichen konstanten elektrischen Strom zu laden, sodass eine Belastung der Batterie verringert ist.

Mittels des Schaltelements ist es möglich, die an der Empfangsspule anliegende elektrische Spannung zu verändern. Falls das Schaltelement geöffnet ist, wird die an der Empfangsspule anliegende elektrische Spannung mittels der mittels der Batterie bereitgestellten elektrischen Spannung sowie der über der Diode anfallende elektrische Spannung bestimmt. Falls hingegen das Schaltelement geschlossen ist, fällt vorzugsweise über die Kommunikationseinrichtung im Wesentlichen keine elektrische Spannung ab, sodass die an der Empfangsspule anliegende elektrische Spannung verringert ist und zweckmäßigerweise der mittels der Batterien bereitgestellten elektrischen Spannung entspricht. Zumindest wird die an der Empfangsspule anliegende elektrische Spannung auch mittels des Zweigs beeinflusst, der das Schaltelement aufweist.

Beispielsweise ist das Schaltelement parallel zur Diode geschaltet. Mit anderen Worten sind keine weiteren Bauteile bei dieser Schaltung vorhanden. Besonders bevorzugt jedoch ist die Diode elektrisch in Reihe mit zumindest einem weiteren elektrischen/elektronischen Bauteil geschaltet, wobei die Reihenschaltung mit dem Schaltelement überbrückt ist. Vorzugsweise ist das Schaltelement zu der Reihenschaltung parallel geschaltet. Besonders bevorzugt ist das weitere Bauteil eine zweite Diode, deren Sperrrichtung insbesondere gleich der Sperrrichtung der Diode ist. Aufgrund der zweiten Diode ist die über die Kommunikationseinheit bei geöffnetem Schaltelement anfallende elektrische Spannung vergrößert, sodass auch eine Änderung des Energiebetrags oder zumindest der an dem Ladegerät anliegenden elektrischen Spannung vergrößert ist. Somit ist ein Erfassen und/oder Dekodieren der von dem Hörgerät übertragenen Daten erleichtert. Dabei wird das Laden der Batterie aufgrund der beiden Dioden im Wesentlichen nicht beeinflusst. In einer Weiterbildung sind mehrere derartige, oder zumindest zweite, Dioden vorhanden.

Zweckmäßigerweise ist das Schaltelement ein Halbleiterschalter, das somit einen Steuereingang aufweist. Beispielsweise ist der Steuereingang direkt mit den zu übertragenden Daten beaufschlagt, sodass eine Konstruktion vereinfacht ist. Hierbei liegen die Daten insbesondere bereits codiert vor, wobei bei einem angelegten Pegel insbesondere das Schaltelement in den leitenden Zustand geschaltet wird, und wobei dieses ansonsten sich in einem elektrisch nichtleitenden Zustand befindet. Vorzugsweise ist das Schaltelement ein Feldeffekttransistor, das somit ein Gate, ein Drain und ein Source aufweist. Beispielsweise ist hierbei das Gate mit den Daten direkt beaufschlagt. Besonders bevorzugt jedoch ist das Gate über eine Spannungsquelle mit dessen Source verbunden. Mittels der Spannungsquelle wird hierbei eine elektrische Gleichspannung bereitgestellt. Besonders bevorzugt ist das mit der Spannungsquelle ein Widerstand elektrisch in Reihe geschaltet, sodass ein zwischen dem Gate und der Source fließender elektrischer Strom begrenzt ist. Die Spannungsquelle ist mittels eines weiteren Schaltelements überbrückt. Falls das weitere Schaltelement geschlossen ist, ist somit das Gate mit der Source niederohmig elektrisch kontaktiert, weswegen das Schaltelement insbesondere elektrisch nichtleitend ist. Lediglich wenn das weitere Schaltelement geöffnet ist, wirkt die mittels der Spannungsquelle bereitgestellte elektrische Spannung auf das Gate, sodass das Schaltelement elektrisch leitend ist. Das weitere Schaltelement ist insbesondere in Abhängigkeit der zu übertragenden Daten betätigt, wobei mittels dessen lediglich vergleichsweise geringe Ströme geführt werden und/oder eine vergleichsweise geringe elektrische Spannung anliegt. Somit ist es möglich, dieses vergleichsweise kostengünstig auszugestalten.

Besonders bevorzugt ist das weitere Schaltelement ebenfalls ein Feldeffekttransistor, dessen Gate über eine weitere Spannungsquelle mit dessen Source verbunden ist. Besonders bevorzugt ist hierbei zudem ein weiterer Widerstand elektrisch in Reihe mit der Spannungsquelle geschaltet, sodass ein Stromfluss zwischen dem Gate und der Source des weiteren Schaltelements begrenzt ist. Besonders bevorzugt ist dabei die weitere Spannungsquelle gegen einen Dateneingang geführt. Insbesondere liegen bei Betrieb an dem Dateneingang die zu übertragenden Daten in codierter Form vor. Vorzugsweise wird die mittels der weiteren Spannungsquelle bereitgestellt elektrische Spannung anhand der Daten beeinflusst, wie erhöht oder verringert, sodass in Abhängigkeit der an dem Dateneingang bereitgestellten Daten das zweite Schaltelement elektrisch leitend oder elektrisch nichtleitend ist. In Abhängigkeit hiervon ist das Schaltelement elektrisch leitend und somit die Diode kurzgeschlossen, oder die trägt Diode zu dem elektrischen Widerstand der Kommunikationseinheit bei. Insbesondere ist der Dateneingabe zwischen dem etwaigen weiteren Widerstand und der weiteren Spannungsquelle angeordnet, vorzugsweise auf der Seite des Gates bezüglich der weiteren Spannungsquelle geordnet.

Besonders bevorzugt ist die Batterie mit einer Kapazität überbrückt, die vorzugsweise als ein Kondensator ausgestaltet ist. Mittels der Kapazität wird zumindest implizit insbesondere die an der Empfangsspule anliegende elektrische Spannung vorgegeben, wobei jedoch keine zeitliche Abhängigkeit vorhanden ist. Mittels der Kapazität wird vorzugsweise der zu der Batterie geleitete elektrische Strom geglättet und vorzugsweise im Wesentlichen konstant gehalten, auch wenn mittels der Kommunikationseinheit die an der Empfangsspule anliegende elektrische Spannung verändert wird. Somit ist eine Belastung der Batterie verringert. Insbesondere sind dabei die Diode und das Schaltelement vorhanden. Falls das Schaltelement geschlossen ist, ist der mittels der Kommunikationseinheit bereitgestellte Widerstand vergleichsweise gering, und die Kapazität ist insbesondere direkt mit der Ladeeinheit elektrisch kontaktiert, sodass im Wesentlichen ein unverzügliches Laden der Kapazität erfolgt. Falls hingegen das Schaltelement geöffnet ist, ist ein elektrischer Stromfluss verringert, weswegen die Batterie zumindest teilweise aus der Kapazität gespeist wird.

Das Hörgerätesystem weist ein Hörgerät auf, das eine induktive Ladeeinheit, die eine Empfangsspule aufweist, und eine Batterie umfasst, die über eine Kommunikationseinheit mit der Ladeeinheit elektrisch verbunden ist. Ferner weist das Hörgerätesystem ein Ladegerät auf, das auch als externes Ladegerät bezeichnet wird. Das Ladegerät dient dem induktiven Laden und weist insbesondere eine elektrische Spule sowie eine Ansteuerschaltung auf, mittels derer bei Betrieb an der Spule des Ladegeräts eine Wechselspannung angelegt wird, sodass sich ein zeitlich veränderliches Magnetfeld ergibt. Dieses wechselwirkt insbesondere mit der Empfangsspule des Hörgeräts, wenn diese eine vergleichsweise geringen Abstand zueinander aufweisen. Zweckmäßigerweise ist die Frequenz der angelegten Wechselspannung auf das Hörgerät angepasst. Insbesondere sind das Ladegerät und das Hörgerät zueinander separate Komponenten und können voneinander entfernt werden. Geeigneterweise werden dies lediglich für ein Laden des Hörgeräts, nämlich dessen Batterie, aneinander angenähert. Beispielsweise weist das Ladegerät eine Haltevorrichtung zum Befestigen oder zumindest vorübergehenden Halten des Hörgeräts auf.

Das Hörgerätesystem ist vorzugsweise gemäß einem Verfahren betrieben, das insbesondere zum Laden des Hörgeräts verwendet wird, nämlich zweckmäßigerweise dessen Batterie. Hierbei wird an die elektrische Spule des Ladegeräts eine elektrische Wechselspannung angelegt. Wenn sich in das Hörgerät in der Nähe des Ladegeräts befindet, wird eine elektrische Spannung in der Empfangsspule induziert, die zu einem elektrische Stromfluss von der Empfangsspule zu der Batterie führt. Somit erfolgt eine Energieübertragung von dem Ladegerät zu dem Hörgerät. Dabei wird geeigneterweise mittels einer Überwachungseinheit des Ladegeräts die Menge der übertragenen Energie ermittelt, wofür die an der elektrischen Spule anliegende elektrische Spannung und der damit geführte elektrische Strom erfasst werden. Mittels der Kommunikationseinheit wird eine an der Empfangsspule anliegende elektrische Spannung in Abhängigkeit von zu übertragenden Daten verändert. Infolgedessen verändert sich die von dem Ladegerät zu dem Hörgerät übertragenen Energiemenge, was mittels der Überwachungseinheit erfasst wird. Die Veränderung der Energiemenge korrespondiert dabei zu der Veränderung der elektrischen Spannung und somit auch zu den übertragenen Daten. Somit werden mittels des Verfahrens Daten von dem Hörgerät zu dem Ladegerät übertragen.

Die im Zusammenhang mit dem Verfahren erläuterten Weiterbildungen und Vorteile sind sinngemäß auch auf das Hörgerät / das Hörgerätesystem sowie untereinander zu übertragen und umgekehrt.

Nachfolgend werden Ausführungsbeispiele der Erfindung anhand einer Zeichnung näher erläutert. Darin zeigen:
- Fig. 1: schematisch ein Hörgerätesystem, das ein Hörgerät und ein Ladegerät aufweist,
- Fig. 2: schematisch vereinfacht einen Ausschnitt eines Schaltplans des Hörgerätesystems,
- Fig. 3: ein Verfahren zum Betrieb des Hörgeräts,
- Fig. 4: die zeitlichen Verläufe von an unterschiedlichen Komponenten des Hörgerätesystems anliegenden elektrischen Spannungen, und
- Fig. 5: eine alternative Ausgestaltung einer Kommunikationseinheit des Hörgeräts.

Einander entsprechende Teile sind in allen Figuren mit den gleichen Bezugszeichen versehen.

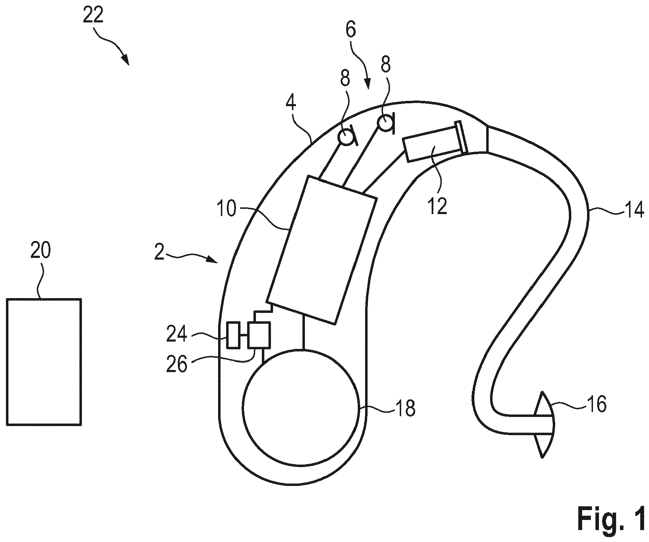

In Figur 1 ist schematisch ein Hörgerät 2 in Form eines Hörhilfegeräts gezeigt, das vorgesehen und eingerichtet ist, hinter einem Ohr eines Trägers (Benutzer, Hörgeräteträger, Nutzer) getragen zu werden. Mit anderen Worten handelt es sich um ein Hinter-dem-Ohr-Hörhilfegerät ("Behind-the-Ear" - Hörhilfegerät). Das Hörgerät 2 umfasst ein Gehäuse 4, das aus einem Kunststoff gefertigt ist. Innerhalb des Gehäuses 4 ist ein Mikrofon 6 mit zwei Mikrofoneinheiten 8 in Form von jeweils einem elektromechanischen Schallwandler angeordnet, die omnidirektional ausgestaltet sind. Indem ein zeitlicher Versatz zwischen den mittels der omnidirektionalen Mikrofoneinheiten 8 erfassten akustischen Signalen verändert wird, ist es ermöglicht, eine Richtcharakteristik des Mikrofons 6 zu verändern, sodass ein Richtmikrofon realisiert ist.

Die beiden Mikrofoneinheiten 8 sind mit einer Signalverarbeitungseinheit 10 signaltechnisch gekoppelt, die eine nicht näher gezeigte Verstärkerschaltung und einen Signalprozessor umfasst. Die Signalverarbeitungseinheit 10 ist ferner mittels Schaltungselementen gebildet, wie zum Beispiel elektrischen und/oder elektronischen Bauteilen. Der Signalprozessor ist ein digitaler Signalprozessor (DSP) und über einen nicht näher dargestellten A/D-Wandler signaltechnisch mit den Mikrofoneinheiten 8 verbunden.

Mit der Signalverarbeitungseinheit 10 ist ein Hörer 12 signaltechnisch gekoppelt. Mittels des Hörers 12, der ein elektromechanischer Schallwandler ist, wird bei Betrieb ein mittels der Signalverarbeitungseinheit 10 bereitgestelltes (elektrisches) Signal in einen Ausgabeschall gewandelt, also in Schallwellen. Diese werden in einen Schallschlauch 14 eingeleitet, dessen eines Ende an dem Gehäuse 4 befestigt ist. Das andere Ende des Schallschlauchs 14 ist mittels eines Doms 16 umschlossen, der im bestimmungsgemäßen Zustand in einem hier nicht näher dargestellten Gehörgang des Trägers des Hörgeräts 2, angeordnet ist.

Die Bestromung der Signalverarbeitungseinheit 10 erfolgt mittels einer in dem Gehäuse 4 angeordneten Batterie 18. Von der Signalverarbeitungseinheit 10 wird ein Teil der elektrischen Energie zu dem Mikrofon 6 sowie dem Hörer 12 geleitet. Die bei Betrieb des Hörgeräts 2 von der Batterie 18 abgegebene elektrische Energie wird in einem Ladevorgang des Hörgeräts 2 kabellos von einem (externen) Ladegerät 20 zur Verfügung gestellt. Das Ladegerät 20 und das Hörgerät 2 bilden ein Hörgerätesystem 22, wobei das Hörgerät 2 und das Ladegerät 20 zwei zueinander separate Komponenten sind. Somit ist es möglich, diese zueinander unabhängig zu bewegen, wobei das Ladegerät 20 zweckmäßigerweise eine nicht näher dargestellte Haltevorrichtung aufweist, mittels derer das Hörgerät 2 beim Laden gehalten wird.

Die von dem Ladegerät 20 bereitgestellte elektrische Energie wird von einer induktiven Ladeeinheit 24 des Hörgeräts 2 kabellos empfangen. Die Ladeeinheit 24 ist über eine Kommunikationseinheit 26 mit der Batterie 18 elektrisch verbunden, sodass die mittels der Ladeeinheit 24 empfangene elektrische Energie zu der Batterie 18 geleitet werden kann. Die Kommunikationseinheit 26 ist zudem mit der Signalverarbeitungseinheit 10 signaltechnisch verbunden, und bei Betrieb werden mittels der Kommunikationseinheit 26 von der Signalverarbeitungseinheit 10 zu dem Ladegerät 20 zu übertragende Daten abgefragt. Zusammenfassend ist das Hörgerätesystem 22 zum induktiven Laden ausgestaltet, also zum kabellosen Energieübertragung von dem Ladegerät 20 zu dem Hörgerät 2. dabei soll auch eine Kommunikation zwischen dem Hörgerät 2 zu dem Ladegerät 20 erfolgen.

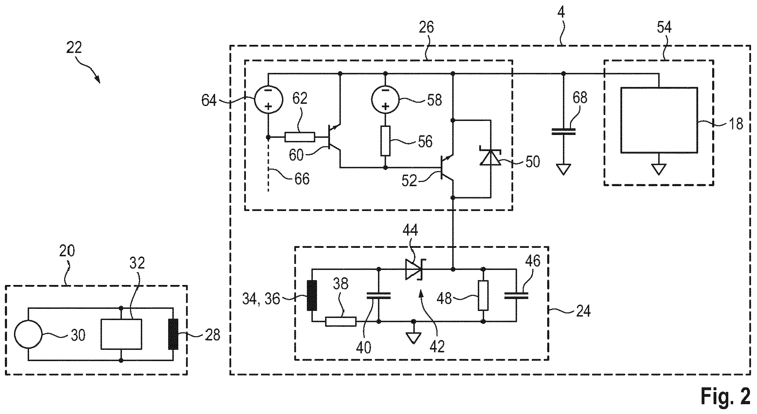

In Figur 2 ist schematisch vereinfacht ausschnittsweise ein Schaltplan des Hörgerätesystems 22 dargestellt. Das Ladegerät 20 weist eine elektrische Spule 28 auf, die eine Induktivität von 100 nH aufweist, und die mittels einer Ansteuerschaltung 30 angesteuert wird. Hierbei wird mittels der Ansteuerschaltung 30, die mehrere, nicht näher dargestellte elektrische und/oder elektronische Bauteile aufweist, an die elektrische Spule 28 eine elektrische Wechselspannung angelegt, sodass sich durch die elektrische Spule 28 ein Wechselstrom ergibt. Infolgedessen ergibt sich ein Magnetfeld in der Umgebung das Ladegeräts 20. Das Ladegeräts 20 umfasst ferner eine Überwachungseinheit 32 mittels derer die an die elektrische Spule 28 angelegte elektrische Spannung sowie der durch die elektrische Spule 28 fließende elektrische Strom erfasst wird. Hieraus wird ermittelt, wie groß ein Energieübertragung von dem Ladegerät 20 zu dem Hörgerät 2 ist.

Das Hörgerät 2, nämlich die Ladeeinheit 24 weist eine Empfangsspule 34 auf, in der aufgrund des mittels der elektrischen Spule 28 erstellten Magnetfelds eine elektrische Spannung induziert wird, sodass an der Empfangsspule 34 eine elektrische Spannung 36 anliegt, die zu einem elektrischen Strom führt. Die Empfangsspule 34 ist mit einem ersten Widerstand 38 und einem ersten Kondensator 40 elektrisch in Reihe geschaltet. Der erste Widerstand 38 ist dabei beispielsweise ein parasitärer Widerstand der Empfangsspule 34 und/oder der verwendeten elektrischen Leitungen. Die Induktivität der Empfangsspule 34 beträgt 230 nH, und der Widerstand des ersten Widerstand 38 beträgt 0,5 Ohm. Die Kapazität des ersten Kondensators 40 beträgt 600 pF. Somit ist hier ein Schwingkreis gebildet, dessen Resonanzfrequenz auf die mittels der Ansteuerschaltung 30 bereitgestellte Wechselspannung angepasst ist.

Zu der Empfangsspule 34 ist ein Gleichrichter 42 parallelgeschaltet, der im Wesentlichen mit einer Hilfsdiode 44 gebildet ist. Mittels der Gleichrichters 42 wird sichergestellt, dass, falls durch die Empfangsspule 34 ein elektrischer Strom fließt, dieser aus dem Schwingkreis in eine Richtung fließen kann. Parallel zum Gleichrichter 42 ist ein zweiter Kondensator 46 geschaltet, dessen Kapazität 100 nF beträgt. Somit wird mittels des über die Diode 44 fließenden elektrischen Stroms der zweite Kondensator 46 geladen. Parallel hierzu ist ein zweiter Widerstand 48 geschaltet, dessen Widerstand 100 kOhm beträgt. In einer Weiterbildung ist der zweite Widerstand 48 nicht vorhanden und der Widerstand von 100kOhm ergibt sich , wenn die Batterie vollständig geladen ist oder zumindest nicht geladen wird.

Mit der der Empfangsspule 34 abgewandten Seite des Gleichrichters 42 ist die Kommunikationseinheit 26 verbunden, und somit zumindest über die Hilfsdiode 44 mit der Empfangsspule 34. Auch ist die Kommunikationseinheit 26 somit mit dem zweiten Kondensator 46 verbunden, mittels dessen ein im Wesentlichen konstanter Stromfluss von der Ladeeinheit 24 zur Kommunikationseinheit 26 sichergestellt ist, auch wenn sich durch die Empfangsspule 34 ein elektrischer Wechselstrom ergibt. Die Kommunikationseinheit 26 weist dabei eine Diode 50 auf, die mit der Ladeeinheit 24, nämlich dem zweiten Kondensator 46 verbunden ist. Parallel zu der Diode 50 ist ein Schaltelement 52 geschaltet, und das Schaltelement 52 und die Diode 50 sind mit der Batterie 18 elektrisch verbunden. Die Diode 50 ist derart angeordnet, dass ein Stromfluss von der Ladeeinheit 24 zur Batterie 18 stets möglich ist. In die umgekehrte Richtung ist dieser über die Diode 50 unterbunden und lediglich über das geschlossene Schaltelement 52 möglich. Zusammenfassend sind die Ladeeinheit 24 und die Batterie 18 mittels der Diode 50 elektrisch verbunden, die mittels des Schaltelements 52 überbrückt ist.

Die Batterie 18 ist ein Bestandteil einer Batterieeinheit 54, die einen nicht näher dargestellten Laderegler umfasst, mittels dessen eine an der Batterie 18 angelegte elektrische Spannung und/oder ein in die Batterie 18 eingeleiteter elektrische Strom zumindest geringfügig angepasst wird. Mit anderen Worten wird nicht der direkten von der Ladeeinheit 24 zur Verfügung gestellte und über die Kommunikationseinheit 26 geleitete elektrische Strom zum Laden der Batterie 18 stets verwendet, sondern mittels des Ladereglers erfolgt eine Anpassung, insbesondere in Abhängigkeit des Ladezustand der Batterie 18.

Das Schaltelement 52 ist als Feldeffekttransistor ausgestaltet, wobei sich die "Source" des Feldeffekttransistors sich auf Seiten der Batterie 18 befindet, und der "Drain" auf Seiten der Ladeeinheit 24. Das Gate des es Feldeffekttransistors ist über eine Reihenschaltung aus einem Widerstand 56, der 10 kOhm aufweist, und eine Spannungsquelle 58 mit dem Source des Feldeffekttransistors verbunden. Der elektrischen Reihenschaltung aus dem Widerstand 56 und der Spannungsquelle 58 ist ein weiteres Schaltelement 60 parallel geschaltet, sodass mittels des weiteren Schaltelements 60 das Gate des Schaltelements 52 auch mit der Source des Schaltelements 52 verbunden ist.

Das weitere Schaltelement 60 ist ein Feldeffekttransistor, und das Gate des weiteren Schaltelements 60 ist über eine Reihenschaltung aus einem weiteren Widerstand 62 und einer weiteren Spannungsquelle 64 mit dem Source des weiteren Schaltelements 60 verbunden. Mittels der beiden Spannungsquelle 58, 64 wird jeweils eine Gleichspannung bereitgestellt. Mittels der beiden Widerständen 56, 60, die zueinander baugleich sind, wird sichergestellt, dass kein übermäßiger Stromfluss zwischen dem Gate und der Source des jeweiligen Schaltelements 52, 60 erfolgt.

Ein Dateneingang 66 ist gegen die weitere Spannungsquelle 64 und den weiteren Widerstand 62 geführt. Folglich ist das Gate des weiteren Schaltelements 62 über die weitere Spannungsquelle 64 mit der Source des weiteren Schaltelements 60 verbunden, wobei die weitere Spannungsquelle 64 gegen den Datenausgang 66 geführt ist, der über den weiteren Widerstand 62 mit dem Gate des weiteren Schaltelements 60 verbunden ist. Der Dateneingang 66 ist mit der Signalverarbeitungseinheit 10 verbunden.

Parallel zur Batterieeinheit 54 ist eine Kapazität 68 geschaltet, sodass die Batterie 18 mit in der Kapazität 58 überbrückt ist. Die Kapazität 68 ist ein Kondensator, dessen Kapazität 2 µF beträgt.

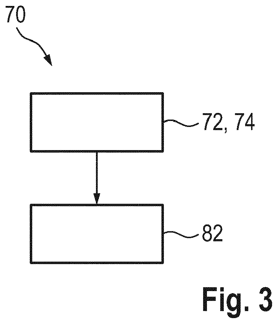

Das Hörgerät 2 ist gemäß einem in Figur 3 dargestellten Verfahren 70 betrieben, das ausgeführt wird, wenn mittels des Ladegeräts 20 ein zeitlich veränderliches Magnetfeld bereitgestellt wird, sodass in der Empfangsspule 34 eine elektrische Spannung induziert wird. Aufgrund der induzierten elektrischen Spannung liegt an der Empfangsspule dabei die elektrische Spannung 36 an. Aufgrund dieser ergibt sich ein elektrischer Stromfluss über den Gleichrichter 42, sodass der zweite Kondensator 46 geladen wird. Auch ergibt sich ein elektrischer Strom 71, der über die Kommunikationseinheit 26 fließt, nämlich über die Diode 50 sowie über das Schaltelement 52, sofern dieses geschlossen, also sich in dem elektrisch leitenden Zustand befindet. Mittels des elektrischen Stroms 71 wird die Kapazität 68 sowie mittels der Batterieeinheit 54 die Batterie 18 geladen. Aufgrund der induzierten elektrischen Spannung sowie des sich ergebenden elektrischen Stroms 71 erfolgt eine Energieübertragung von dem Ladegerät 20 zu dem Hörgerät 2, der mittels der Überwachungseinheit 32 ermittelt wird.

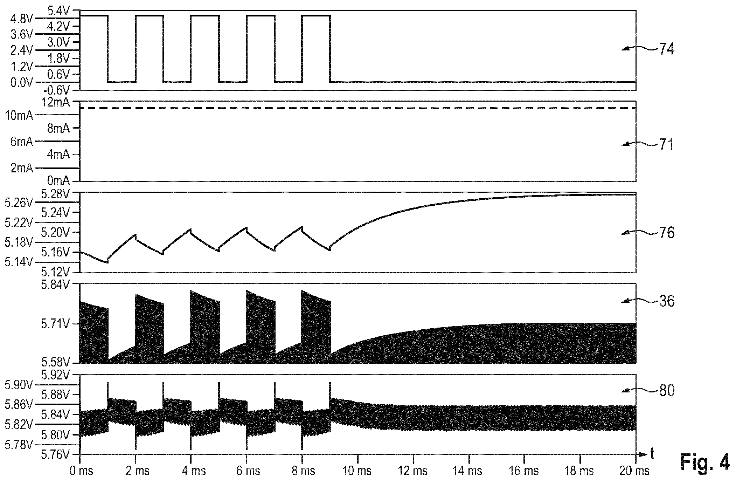

In einem ersten Arbeitsschritt 72 werden von dem Hörgerät 2 zu der Ladeeinheit 20 zu übertragende Daten 74 ermittelt. Diese liegen hierbei in binärcodierter Form vor und werden von der Signalverarbeitungseinheit 10 über den Dateneingang 66 bereitgestellt. Der zeitliche Verlauf der Daten 74, nämlich einer an dem Dateneingang 66 anliegenden elektrischen Spannung, ist in Figur 4 dargestellt, wobei die dargestellten Einheiten willkürlich sind. So beträgt die an dem Dateneingang 66 anliegende elektrische Spannung entweder 10 V oder 5 V. Wenn an dem Dateneingang 66 die vergrößerte elektrische Spannung anliegt, also insbesondere ein "High"-Signal vorliegt, wird das weitere Schaltelement 60 in den elektrisch leitenden Zustand versetzt. Infolgedessen sind das Gate und die Source des Schaltelements 52 niederohmig miteinander verbunden, weswegen das Schaltelement 52 elektrischen nichtleitend ist. Somit ist lediglich ein elektrischer Stromfluss von der Ladeeinheit 24 zu der Batterie 18 über die Diode 50 möglich, die einen elektrischen Widerstand aufweist.

Somit korrespondiert die an der Empfangsspule 34 anliegende elektrische Spannung 36, zumindest die Amplitude, der Summe einer über die Kapazität 68 anfallenden elektrischen Spannung 76 zuzüglich der wir über die Diode 50 anfallenden elektrischen Spannung. Infolgedessen sinkt die an der Kapazität 68 anliegende elektrische Spannung 76 geringfügig ab, wohingegen die an der Empfangsspule 34 anliegende elektrische Spannung 36, nämlich die Amplitude, ansteigt. Falls hingegen das weitere Schaltelement 60 aufgrund der Daten 74, nämlich des "Low"-Zustands, geöffnet wird, liegt an dem Gate und der Source des Schaltelement 52 die mittels der Spannungsquelle 58 bereitgestellte elektrische Spannung an, weswegen das Schaltelement 52 geschlossen wird, also in den elektrisch leitenden Zustand versetzt wird. Infolgedessen nähert sich die an der Kapazität 68 anliegende elektrische Spannung 76 der an dem Gleichrichter 42 anliegenden elektrischen Spannung an, deren Höhe gleich der Amplitude der an der Empfangsspule 34 anliegenden elektrischen Spannung 36 ist. Dabei bleibt, unabhängig vom Zustand des Schaltelements 52, der über die Kommunikationseinheit 26 geführte elektrische Strom 71 konstant.

Zusammenfassend wird somit mittels der Kommunikationseinheit 26 die an der Empfangsspule 34 anliegende elektrische Spannung 36 in Abhängigkeit der zu übertragenden Daten 74 verändert. Hierfür wird der elektrische Widerstand der Kommunikationseinheit 26 in Abhängigkeit der zu übertragenden Daten 74 eingestellt. Aufgrund des im Wesentlichen konstanten elektrischen Stroms 71 ist dabei eine Erwärmung des Hörgeräts 2, insbesondere der Ladeeinheit 24 sowie der Batterieeinheit 54, vergleichsweise gering.

Jede abrupte Änderung der an der Empfangsspule 34 anliegenden elektrischen Spannung 36 ergibt sich in der an der elektrischen Spule 28 der Ladeeinheit 20 anliegenden elektrischen Spannung 80, nämlich der Amplitude, eine Spannungsspitze, die mittels der Überwachungseinheit 32 registriert wird. Anhand der Spannungsspitzen werden mittels der Überwachungseinheit 32 die Daten 74 rekonstruiert.

Falls keine Daten 74 übertragen werden sollen, wird ein zweiter Arbeitsschritt 82 durchgeführt. In diesem verbleibt das weitere Schaltelement 60 geöffnet, sodass das Schaltelement 52 geschlossen ist, weswegen sich die Höhe der an der Kapazität 68 anliegende elektrische Spannung 76 der Amplitude der an der Empfangsspule 34 anliegenden elektrischen Spannung 36 annähert. Daher ergeben sich in der an elektrischen Spulen 28 anliegenden elektrische Spannung 80 keinen Stromspitzen mehr.

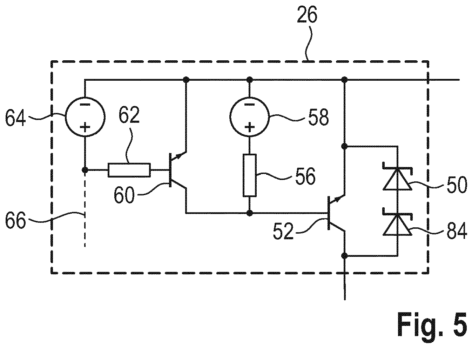

In Figur 5 ist ein Schaltplan einer Abwandlung der Kommunikationseinheit 26 dargestellt. Im Vergleich zur vorhergehenden Ausgestaltungsform ist lediglich eine zweite Diode 84 vorhanden, die baugleich zu der Diode 50 und elektrisch in Reihe zu dieser geschaltet ist, wobei die Reihenschaltung mittels des Schaltelements 52 überbrückt ist. Dabei ist das Schaltelement 52 elektrisch parallel zu der Reihenschaltung aus den beiden Dioden 50, 84 geschaltet. Aufgrund der beiden Dioden 50, 84 ist die Änderung der an der Empfangsspule 34 anliegenden elektrischen Spannung 36 bei einer Änderung des Schaltzustands des Schaltelements 52 vergrößert. Zusammenfassend umfasst somit die Kommunikationseinheit 26 die zweite Diode 84, die elektrisch in Reihe mit der Diode 50 geschaltet ist, wobei die Reihenschaltung mittels des Schaltelements 52 überbrückt ist.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Hörgerät
- 4: Gehäuse
- 6: Mikrofon
- 8: Mikrofoneinheit
- 10: Signalverarbeitungseinheit
- 12: Hörer
- 14: Schallschlauch
- 16: Dom
- 18: Batterie
- 20: Ladegerät
- 22: Hörgerätesystem
- 24: Ladeeinheit
- 26: Kommunikationseinheit
- 28: elektrische Spule
- 30: Ansteuerschaltung
- 32: Überwachungseinheit
- 34: Empfangsspule
- 36: an der Empfangsspule anliegende elektrische Spannung
- 38: erster Widerstand
- 40: erster Kondensator
- 42: Gleichrichter
- 44: Hilfsdiode
- 46: zweiter Kondensator
- 48: zweiter Widerstand
- 50: Diode
- 52: Schaltelement
- 54: Batterieeinheit
- 56: Widerstand
- 58: Spannungsquelle
- 60: weiteres Schaltelement
- 62: weiterer Widerstand
- 64: weitere Spannungsquelle
- 66: Dateneingang
- 68: Kapazität
- 70: Verfahren
- 71: elektrischer Strom
- 72: erster Arbeitsschritt
- 74: Daten
- 76: an der Kapazität anliegende elektrische Spannung
- 80: an der elektrischen Spule anliegende elektrische Spannung
- 82: zweiter Arbeitsschritt

## Patentansprüche

1. Verfahren (70) zum Betrieb eines Hörgeräts (2), insbesondere Hörhilfegerät, das eine induktive Ladeeinheit (20), die eine Empfangsspule (34) aufweist, und eine Batterie (18) umfasst, die über eine Kommunikationseinheit (26) mit der Ladeeinheit (24) elektrisch verbunden ist, wobei mittels der Kommunikationseinheit (26) eine an der Empfangsspule (34) anliegende elektrische Spannung (36) in Abhängigkeit von zu übertragenden Daten (74) verändert wird.

2. Verfahren (70) nach Anspruch 1,
**dadurch gekennzeichnet,**
**dass** ein elektrischer Widerstand der Kommunikationseinheit (26) in Abhängigkeit der zu übertragenden Daten (74) eingestellt wird.

3. Hörgerät (2), insbesondere Hörhilfegerät, das eine induktive Ladeeinheit (24), die eine Empfangsspule (34) aufweist, und eine Batterie (18) umfasst, die über eine Kommunikationseinheit (26) mit der Ladeeinheit (24) elektrisch verbunden ist, und das gemäß einem Verfahren (70) nach einem der Ansprüche 1 bis 2 betrieben ist.

4. Hörgerät (2) nach Anspruch 3,
**dadurch gekennzeichnet,**
**dass** die Kommunikationseinheit (26) eine Diode (50) aufweist, mittels derer die Ladeeinheit (24) und die Batterie (18) elektrisch verbunden sind, und die mittels eines Schaltelements (52) überbrückt ist.

5. Hörgerät (2) nach Anspruch 4,
**dadurch gekennzeichnet,**
**dass** die Kommunikationseinheit (26) eine zweite Diode (84) aufweist, die in Reihe mit der Diode (50) geschaltet und ebenfalls mittels des Schaltelements (52) überbrückt ist.

6. Hörgerät (2) nach Anspruch 4 oder 5,
**dadurch gekennzeichnet,**
**dass** das Schaltelement (52) ein Feldeffekttransistor ist, dessen Gate über eine Spannungsquelle (58) mit dessen Source verbunden ist, wobei die Spannungsquelle (58) mittels eines weiteren Schaltelements (60) überbrückt ist.

7. Hörgerät (2) nach Anspruch 6,
**dadurch gekennzeichnet,**
**dass** das weitere Schaltelement (60) ein Feldeffekttransistor ist, dessen Gate über eine weitere Spannungsquelle (64) mit dessen Source verbunden ist, wobei die weitere Spannungsquelle (64) gegen einen Dateneingang (66) geführt ist.

8. Hörgerät (2) nach einem der Ansprüche 3 bis 7,
**dadurch gekennzeichnet,**
**dass** die Batterie (18) mit einer Kapazität (68) überbrückt ist.

9. Hörgerätesystem (22) mit einem Hörgerät (2) nach einem der Ansprüche 3 bis 8 und mit einem Ladegerät (20)
